# NEUE EUROPÄISCHE PATENTSCHRIFT

(11) **EP 1 785 325 B2**
(45) Veröffentlichungstag und Bekanntmachung des Hinweises auf die Entscheidung über den Einspruch: **26.09.2012**
(45) Hinweis auf die Patenterteilung: 20.08.2008
(21) Anmeldenummer: 06022770.9
(22) Anmeldetag: 02.11.2006
(51) Int. Cl.: B60T 13/68, B60T 17/22, B60T 13/26

(54) **Steuergerät für eine Druckluftbremsanlage eines Kraftfahrzeugs**
Control device for an air pressure brake system for a vehicle
Dispositif de réglage d'un système de freinage à air comprimé pour un véhicule

(30) Priorität: 12.11.2005 DE 102005054089
(43) Veröffentlichungstag der Anmeldung: 16.05.2007
(73) Patentinhaber: Haldex Brake Products GmbH, 69123 Heidelberg (DE)
(72) Erfinder: Aumüller, Ralf, 60437 Frankfurt/Main (DE)
(74) Vertreter: Rehberg Hüppe + Partner

(56) Entgegenhaltungen:
- EP-A2- 1 366 964
- DE-A1- 3 232 127
- DE-A1- 4 037 462
- DE-A1- 4 327 763
- DE-A1- 10 245 815
- DE-A1- 10 251 249
- DE-A1- 10 336 611
- DE-A1- 10 341 723
- DE-A1- 10 354 056
- DE-A1-102004 021 242
- DE-A1-102004 051 812
- DE-A1-102005 026 344
- DE-A1-102005 061 095
- DE-A1-102006 039 764
- DE-A1-102007 002 020
- DE-B3- 10 314 642
- DE-B3-102005 017 591
- DE-B3-102005 019 478
- DE-B3-102005 019 479
- DE-C1- 3 934 243
- US-A1- 20040 145 237
- WABCO FAHRZEUGBREMSEN ECAS FÜR ANHÄNGEFAHRZEUGE November 1995, Seiten 2 - 83
- 'Systeme und Komponenten in Nutzfahrzeugen' WABCO SYSTEME UND KOMPONENTEN IN NUTZFAHRZEUGEN 1998, HANNOVER, Seiten 3,108 - 111
- ING. (GRAD.) PETER BERG: 'Grundlagen, Systeme und Pläne' DRUCKLUFTANLAGEN FÜR NUTZFAHRZEUGE 1 Bd. 98/99, Nr. 3, Februar 1998, D-70442 STUTTGART, Seiten 34-36 - 54-55
- ING. (GRAD.) PETER BERG: 'Geräte' DRUCKLUFTANLAGEN FÜR NUTZFAHRZEUGE 2 Bd. 94/95, Nr. 2, August 1994, D-70442 STUTTGART, Seiten 57 - 59
- FAHRZEUG-VORSCHRIFTEN 2004 WABCO, VEHICLE REGULATIONS FAHRZEUG VORSCHRIFTEN Bd. 22, November 2003, GERMANY, ISSN 815000051
- VDI-VERLAG GMBH, DÜSSELDORF: 'Pneumatik-Kompendium', 1977, VDI-VERLAG GMBH, DÜSSELDORF, ISBN 3184003795 Artikel S.B. ANDERSON, A.CARLSSON, J. ECKERSTEN: '17.1.3. Welche Funktionen können mit einem Ventil ausgeführt werden?', Seiten 155 - 157

## Beschreibung

Die Erfindung betrifft ein Steuergerät für eine Druckluftbremsanlage eines Kraftfahrzeugs, das eine Feststellbremse und eine Anhängerbremse aufweist. Dabei geht es um ein eine Feststellbremse aufweisendes Zugfahrzeug, also mit Federspeicherbremszylindern. Das Zugfahrzeug weist auch ein Anhängersteuerventil für eine Anhängerbremsanlage auf.

### STAND DER TECHNIK

DE 103 36 611 A1 offenbart ein Feststellbrems-Modul, welches über eine mehradrige elektrische Leitung mit einem manuellen Feststellbrems-Signalgeber verbunden ist. Des Weiteren besitzt das Feststellbrems-Modul Anschlüsse für eine Spannungsversorgung und eine Datenschnittstelle. Der Anschluss für die Datenschnittstelle dient zur Verbindung mit einem in dem Fahrzeug vorgesehenen Datenbus-System, welches auch als Fahrzeugbus bezeichnet wird. Dieser Fahrzeugbus dient einem Datenaustausch zwischen verschiedenen in dem Fahrzeug vorgesehenen, eine elektronische Steuerung enthaltenden Geräten. Das Feststellbrems-Modul ist zur Druckluftversorgung mit zwei separaten Druckluftleitungen mit zwei Druckluftvorratsbehältern verbunden, wobei die Druckluftleitungen in ein Wechselventil münden, dessen Ausgang über eine Druckluft-Zufuhrleitung u. a. mit einem Standsicherheitsventil verbunden ist. An Druckluftanschlüsse von Federspeicherteilen der Bremszylinder sind über Wechselventile und aus Sicherheitsgründen doppelt ausgelegte Druckluftleitungen an das Feststellbrems-Modul angeschlossen, welches eine Drucksteuerung an diesen weiteren Druckluftanschlüssen mit Hilfe elektronischer Steuerungsmittel erlaubt. Die aus Sicherheitsgründen doppelt ausgelegten Druckluftleitungen erlauben im Zusammenhang mit den Wechselventilen sowie einem ausgangsseitig des Feststellbrems-Moduls angeordneten weiteren Wechselventil im Falle einer Leckage an einer der Druckluftleitungen eine Aufrechterhaltung der Druckluftsteuerung über die verbleibende Druckluftleitung. Die Wechselventile sperren dabei automatisch die den geringeren Druck aufweisende Druckluftleitung ab. In dem Feststellbrems-Modul ist ein als 3/2-Wegeventil ausgebildetes Anhängerkontrollventil vorgesehen, welches elektromagnetisch von einer elektronischen Steuereinrichtung betätigbar ist. Zur Beeinflussung der pneumatischen Verhältnisse in dem Feststellbrems-Modul sind zwei weitere elektromagnetisch betätigbare Ventile vorgesehen. Bei dem einen Ventil handelt es sich um ein elektrisch steuerbares normal ausgebildetes Ventil, welches eine bevorzugte Stellung aufweist, die aufgrund der Kraft einer Rückstellfeder eingenommen wird. Diese bevorzugte Stellung ist die Durchgangsstellung, während aufgrund elektrischer Schaltung eine Sperrstellung eingenommen werden kann. Diesem Ventil ist ein Relaisventil nachgeschaltet, von dem Leitungen ausgehen, die einerseits zum Anhängersteuerventil und andererseits zu den Federspeicherbremszylindern des Zugfahrzeugs führen. Diesem normal ausgebildeten Magnetventil ist ein weiteres elektrisch steuerbares Ventil vorgeschaltet, welches jedoch als bistabiles Magnetventil ausgebildet ist. Ein solches bistabiles Magnetventil hat die besondere Eigenschaft, in unbestromtem Fall, d. h. wenn keine elektrische Spannung anliegt, keine bevorzugte Schaltstellung aufzuweisen, was im Gegensatz zu bekannten normalen Magnetventilen steht, die von der Kraft einer Rückstellfeder beaufschlagt bei Stromausfall eine bevorzugte Stellung einnehmen. Dieses bistabile Magnetventil besitzt eine Entlüftungsstellung und eine Durchgangsstellung. Wenn sich das bistabile Magnetventil in der Entlüftungsstellung befindet, und das normale Magnetventil in der Sperrstellung, dann besteht bei Spannungsausfall, z. B. während der Fahrt, die Gefahr, dass die Federspeicherbremszylinder plötzlich ungewollt entlüftet werden, so dass die Federspeicherbremse des Zugfahrzeugs einfällt und der Fahrer durch einen solchen Bremsvorgang überrascht wird.

In der von dem Relaisventil zu dem Anhängersteuerventil führenden Leitung ist ein Schaltventil angeordnet, welches ebenfalls als normales Magnetventil ausgebildet ist, das eine durch die Kraft einer Rückstellfeder eingenommene bevorzugte Durchlassstellung besitzt. In der anderen Schaltstellung verbindet dieses Magnetventil eine Druckluft führende Leitung mit einer Steuerleitung zum Anhängersteuerventil, genauer gesagt zu dessen invertierendem Eingang, so dass in diesem Falle durch Druckbeaufschlagung die Betriebsbremse des Anhängers gelöst wird.

Aus der DE 32 32 127 A1 ist eine Druckluftbremsanlage für Kraftfahrzeuge bekannt. Die Bremsanlage weist eine Druckversorgung und Aufbereitung auf, ein Betriebsbremsventil und ein Handbremsventil sowie Betriebsbremszylinder und Federspeicherbremszylinder. Die Betriebsbremszylinder können über ein Relaisventil angesteuert werden. Auch die Federspeicherbremszylinder können über das Handbremsventil und ein zwischengeschaltetes Relaisventil betätigt werden. Die Druckluftbremsanlage weist darüber hinaus ein Anhängersteuerventil auf, welches über drei Steuerkreise ansteuerbar ist. Zwei dieser Steuerkreise gehören zur Betriebsbremse, der dritte Steuerkreis zur Federspeicherbremse des Zugfahrzeugs.

Die DE 39 34 243 C1 zeigt eine konstruktive Ausführungsmöglichkeit eines Anhängersteuerventils einer solchen Druckluftbremsanlage eines Kraftfahrzeugs. Auch hier sind zwei Steuerkreise für die Ansteuerung des Anhängersteuerventils über die beiden Kreise der Betriebsbremse vorgesehen. Der dritte Steuerkreis wird über das Handbremsventil betätigt.

Aus der DE 103 14 642 B3 ist ein Druckluftaufbereitungsgerät für Kraftfahrzeuge bekannt, welches an einen Kompressor anschließbar ist und alle wesentlichen einzelnen Elemente aufweist, die der Druckluftaufbereitung und der Druckluftsicherung dienen, so z. B. einen Trockner, ein Mehrkreisschutzventil, eine Steuerelektronik usw.. Den Überströmventilen des Mehrkreisschutzventils sind dabei jeweils Druck/Spannungs-Wandler nachgeschaltet, deren Signale in der gemeinsamen Steuerelektronik verarbeitet werden. Das Druckluftaufbereitungsgerät weist darüber hinaus mehrere Ausgangsanschlüsse für zu den einzelnen Kreisen führende Leitungen auf, einschließlich eines Feststellbremsanschlusses für eine zu den Feststellbremszylindern führende Leitung. Das Druckluftaufbereitungsgerät enthält auch integriert eine Ventilanordnung zum gesteuerten Belüften, Absperren und Entlüften des Feststellbremsanschlusses infolge eines von der Steuerelektronik generierten Signals. Die Steuerelektronik weist einen elektrischen Eingangsanschluss für ein Steuersignal auf, welches an einen CAN-Bus oder einen anderen Signalgeber angeschlossen ist. Die Druckluftbremsanlage, zu der dieses Druckluftaufbereitungsgerät gehört, zeigt kein Anhängersteuerventil, so dass die Probleme, die mit einer Federspeicherbremse einerseits und einer Anhängerbremse andererseits gegeben sind, hier nicht angesprochen werden.

Ein Anhängersteuerventil wird bekanntlich auf dem Zugfahrzeug angeordnet, während das zugehörige Anhängerbremsventil auf dem Anhänger angeordnet wird. Wenn das Zugfahrzeug auch mit einer Federspeicherbremse ausgestattet ist und das Anhängersteuerventil einen dritten Anschluss für die Betätigung der Anhängerbremse aufweist, ergibt sich die Notwendigkeit, die Federspeicherbremszylinder des Zugfahrzeugs zu betätigen, also die Federspeicherbremszylinder zu entlüften, und gleichzeitig auch die gesamte Anhängerbremse zu betätigen. Auch auf diese Weise kann ein Lastzug gebremst werden. Die Bremsung sollte in aller Regel stufbar möglich sein.

Bei bekannten Handbremsventilen ist neben einer Be- und Entlüftungsstellung für die Federspeicherbremszylinder des Zugfahrzeugs auch eine so genannte Prüfstellung vorgesehen. In dieser Prüfstellung werden die Federspeicherbremszylinder des Zugfahrzeugs betätigt, die Anhängerbremse aber nicht betätigt. In dieser Prüfstellung muss gewährleistet sein, dass die Federspeicherbremszylinder des Zugfahrzeugs allein in der Lage sind, einen Lastzug gebremst zu halten. Die Verwirklichung einer solchen Prüfstellung an dem Handbremsventil, welches bekanntlich in der Fahrerkabine des Zugfahrzeugs angeordnet ist, erfordert die Verlegung entsprechender Rohrleitungen von dem Handbremsventil zu den entsprechenden Elementen der Druckluftbremsanlage. Diese Rohrleitungen sind erforderlich, entsprechend umständlich und auch aufwendig.

### AUFGABE DER ERFINDUNG

Der Erfindung liegt die Aufgabe zugrunde, die aufwendigen Rohrleitungen in das Fahrerhaus hinein zu reduzieren und eine Prüfstellung auf anderem Wege zu erreichen, in der die Federspeicherbremszylinder des Zugfahrzeugs betätigt sind, also eine Bremswirkung erbringen, während die Anhängerbremse unbetätigt ist.

### LÖSUNG

Die Aufgabe der Erfindung wird erfindungsgemäß mit den Merkmalen des unabhängigen Patentanspruchs 1 gelöst.

### BESCHREIBUNG DER ERFINDUNG

Es wird ein Steuergerät für eine Druckluftbremsanlage eines Kraftfahrzeugs bereitgestellt, welches beispielsweise in Form eines Moduls als Einzelgerät ausgebildet sein kann, aber auch mit seinen wesentlichen Elementen eine integrierte Anordnung, z. B. in einem Druckluftaufbereitungsgerät zulässt. Auf jeden Fall ist eine Druckluftversorgung vorgesehen, die normalerweise über einen Eingangsanschluss erfolgt. Es muss auch möglich sein, Steuersignale auf das Steuergerät zu geben, insbesondere über einen Handbremsschalter, der dann das übliche Handbremsventil ersetzt, aber auch unter Einleitung von Signalen eines CAN-Busses oder einer sonstigen Einrichtung, mit der Steuersignale übermittelt werden. Es ist auch ein Anhängersteuerventil vorgesehen, welches neben den beiden Steueranschlüssen der zweikreisig ausgebildeten Betriebsbremse, die positiv wirken, einen dritten Anschluss für eine negativ wirkende Betätigung der Anhängerbremse beim Betätigen des Federspeichers auf dem Zugfahrzeug verfügt. Die Elemente können in einem gemeinsamen Gehäuse, etwa nach Modulbauart, verwirklicht sein. Auch andere Anordnungen und Integrationen sind möglich. Es kann eine Steuerelektronik oder der Teil einer Steuerelektronik vorgesehen sein, um mindestens zwei Magnetventile zu schalten, die dem gemeinsamen Be- oder Entlüften der Federspeicherbremszylinder und des dritten Steueranschlusses des Anhängersteuerventils dienen. Weiterhin gehört zu dem Steuergerät ein Schaltventil, welches pneumatisch oder als elektrisches Magnetventil ausgebildet werden kann. Das Schaltventil weist auf jeden Fall zwei Stellungen auf. In der einen Stellung ist der Ausgangsanschluss zu den Federspeicherbremszylindern mit dem dritten Steueranschluss des Anhängersteuerventils verbunden. In der anderen Stellung wird nur der zu dem Anhängersteuerventil führende Ausgangsanschluss für dessen dritten Steueranschluss belüftet, während der zu den Federspeicherbremszylindern führende Ausgangsanschluss über die beiden Magnetventile be- oder entlüftbar bleibt. Dies bedeutet, dass der zu den Federspeicherbremszylindern führende Anschluss am Schaltventil zwar abgesperrt wird, die tatsächliche Be- oder Entlüftung der Federspeicherbremszylinder jedoch von den Stellungen bzw. der Stellungskombination der beiden Magnetventile abhängig ist.

Das Schaltventil kann entweder als direkt von der Steuerelektronik gesteuertes Magnetventil ausgebildet oder als pneumatisches Schaltventil vorgesehen sein, das dann über ein zusätzliches Magnetventil vorgesteuert wird. Es lässt sich bei beiden Ausführungsformen in zwei Arten verwirklichen, wobei entweder dessen Durchgangsstellung oder die Belüftungsstellung unter Anschluss an die Druckluftversorgung der normalen Ruhestellung entsprechen. Diese Ruhestellung stellt sich durch die Kraft einer einwirkenden mechanischen Feder ein bzw. ist dadurch gesichert, wenn die Spannungsversorgung ausfällt oder unterbrochen wird. Es versteht sich weiterhin, dass die Federspeicherbremszylinder entweder direkt be- oder entlüftet werden können oder aber unter Zwischenschaltung eines Relaisventils, welches dann ebenfalls über die Druckluftversorgung mit Druckluft versorgt wird. Auch dies gilt für alle Ausführungsformen. Auch die beiden Magnetventile, die von der Steuerelektronik gesteuert und geschaltet werden, lassen verschiedene Ausführungsformen und Kombinationen zu, wie sie zu einem Teil aus der DE 103 14 642 B3 entnehmbar sind. Schließlich können die beschriebenen Elemente in jeder sinnvollen Kombination zusammengefügt und genutzt werden.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft, ohne dass diese zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine erste Ausführungsform des Steuergerätes mit monostabiler Wirkungsweise.
- **Fig. 2**: zeigt eine zweite Ausführungsform des Steuergerätes mit monostabiler Wirkungsweise.
- **Fig.3**: zeigt eine dritte Ausführungsform des Steuergerätes mit bistabiler Wirkungsweise.
- **Fig.4**: zeigt eine vierte Ausführungsform des Steuergerätes mit bistabiler Wirkungsweise, integriert in ein Druckluftaufbereitungsgerät.

### FIGURENBESCHREIBUNG

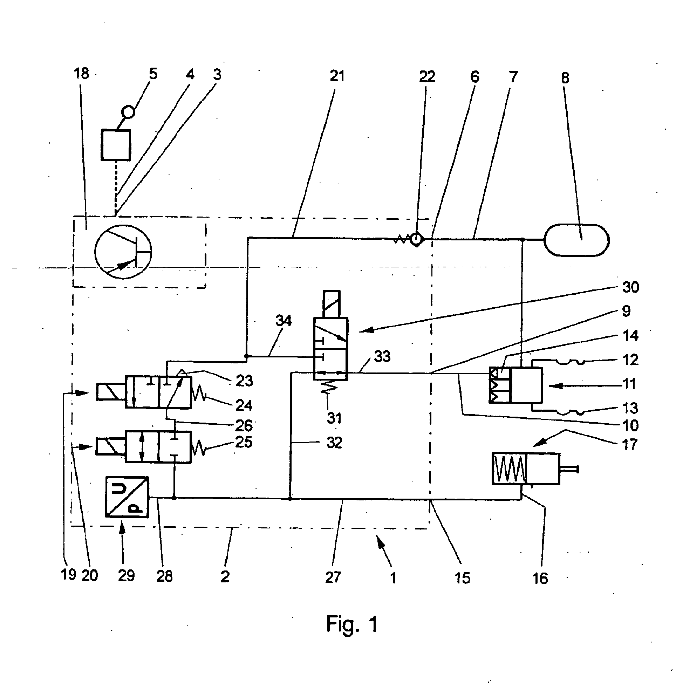

**Fig. 1** zeigt eine erste Ausführungsform nach der vorliegenden Erfindung. Durch eine strichpunktierte Linie ist ein Steuergerät 1 angedeutet, welches beispielsweise nach Modulbauart in einem gemeinsamen Gehäuse 2 realisiert ist. Das Gehäuse 2 weist einen ersten Eingangsanschluss 3 für Steuersignale auf. Es ist hier eine elektrische Leitung 4 angeschlossen, die beispielsweise von einem Handbremsschalter 5 herangeführt ist, der im Fahrerhaus des Zugfahrzeugs angeordnet ist. Das Gehäuse 2 weist einen zweiten Eingangsanschluss 6 auf, der der Druckluftversorgung dient. An den Eingangsanschluss 6 des Gehäuses 2 ist eine Leitung 7 herangeführt, die von einem Druckluftvorratsbehälter 8 ausgeht. Bei diesem Druckluftvorratsbehälter 8 kann es sich um den Druckluftbehälter handeln, der in bekannter Weise einer Druckluftaufbereitungseinrichtung als Behälter des Kreises III zugeordnet ist.

Am Gehäuse 2 ist ein erster Ausgangsanschluss 9 vorgesehen, von dem eine Leitung 10 zu einem Anhängersteuerventil 11 führt. Das Anhängersteuerventil 11 weist, wie dargestellt, drei Steueranschlüsse auf, von denen die beiden ersten Steueranschlüsse der Betriebsbremse zugeordnet sind. Bei einer Betätigung der Betriebsbremse, die in der Regel zweikreisig ausgebildet ist, werden die beiden ersten Steueranschlüsse belüftet, worauf sich eine entsprechende Betätigung der Anhängerbremse einstellt. Hierzu weist das Anhängersteuerventil 11 einen Anschluss für die Bremsleitung 12 auf. Das Anhängersteuerventil 11 weist darüber hinaus in bekannter Weise einen Anschluss für eine Vorratsleitung 13 auf. Das Anhängersteuerventil 11 besitzt, wie dargestellt, einen dritten Steueranschluss 14, der als invertierter Anschluss ausgebildet ist, so dass ein Druckanstieg am Anschluss 14 zu einer abnehmenden Bremswirkung der Anhängerbremse führt. Diese Bremswirkung kann stufbar ausgebildet sein.

Das gemeinsame Gehäuse 2 des Steuergeräts 1 weist auch einen zweiten Ausgangsanschluss 15 auf, von dem eine Leitung 16 zu einem Federspeicherbremszylinder 17 führt, der als einfacher Federspeicherbremszylinder oder auch als so genannter kombinierter Federspeicherbremszylinder ausgebildet sein kann. Die Leitung 16 führt zu der Lösekammer des Federspeicherteils des kombinierten Federspeicherbremszylinders 17. Es versteht sich, dass mindestens zwei solcher Federspeicherbremszylinder 17, aber auch wesentlich mehr davon auf dem Zugfahrzeug vorgesehen sein können.

Innerhalb des gemeinsamen Gehäuses 2 ist eine Steuerelektronik 18 untergebracht, die von außen ein oder mehrere Eingangssignale erhält und verschiedene Elemente schaltet und steuert, die innerhalb des Gehäuses 2 vorgesehen sind. In dem Gehäuse 2 sind so ein erstes Magnetventil 19 und ein zweites Magnetventil 20 angeordnet. Die beiden Magnetventile 19 und 20 besitzen jeweils die dargestellten Stellungen, Anschlüsse und Ausbildungen. Es sei aber hier bereits darauf hingewiesen, dass auch eine andere Ausbildung und Anordnung dieser Magnetventile 19, 20 möglich ist. Das Magnetventil 19 wird über eine Leitung 21 mit Druckluft versorgt. Die Leitung 21 beginnt am Eingangsanschluss 6 und ist über ein Rückschlagventil 22 bis zum Magnetventil 19 geführt. Das Magnetventil 19 weist einen eigenen Entlüftungsanschluss 23 auf. Es besitzt, wie dargestellt, die beiden Stellungen und wird in der ersichtlichen Stellung durch die Kraft einer Feder 24 gehalten. Dies stellt die Ausgangs- oder Ruhestellung dar. Bei Ansteuerung des Magnetventils 19 durch die Steuerelektronik 18 steuert das Magnetventil 19 in die andere Stellung um. Das Magnetventil 19 ist als 3/2-Wegeventil ausgebildet. Das Magnetventil 20 ist ein 2/2-Wegeventil. Die Sperrstellung wird in der unerregten Stellung durch die Kraft einer Feder 25 eingenommen. Das Magnetventil 19 ist mit dem Magnetventil 20 über eine Leitung 26 verbunden. Von dem Magnetventil 20 führt eine Leitung 27 zum Ausgangsanschluss 15 und über die Leitung 16 weiter zum Federspeicherbremszylinder 17. Von der Leitung 27 zweigt eine Leitung 28 ab, die zu einem Druck/Spannungs-Wandler 29 führt, der den herrschenden Druck in eine Spannung wandelt und als Drucksensor diesen Spannungswert an die Steuerelektronik 18 abgibt.

Weiterhin ist ein Schaltventil 30 in dem Gehäuse 2 untergebracht, welches hier in der Ausbildung als Magnetventil dargestellt ist und daher ebenfalls von der Steuerelektronik 18 geschaltet wird. Das Schaltventil 30 besitzt die beiden dargestellten Stellungen und wird in nicht erregtem Zustand von der Kraft einer Feder 31 in die Durchgangsstellung beaufschlagt bzw. gehalten. Von der Leitung 27 zweigt eine Leitung 32 ab, die in der Durchgangsstellung Verbindung zu einer Leitung 33 hat, die zu dem ersten Ausgangsanschluss 9 führt. In dieser Durchgangsstellung ist eine Leitung 34, die mit der Druckluftversorgung der Leitung 21 verbunden ist, abgesperrt. Es ist erkennbar, dass in der durch die Steuerelektronik 18 umgeschalteten Stellung des Schaltventils 30 die Leitung 34 mit der Leitung 33 verbunden ist, während die Leitung 32 an dieser Stelle abgesperrt wird, so dass in der Leitung 32 keine Druckluft fließen kann.

### Das Steuergerät 1 gemäß Fig. 1 lässt folgende Wirkungsweise bzw. Schaltung zu:

Die dargestellten Elemente befinden sich zunächst in der in Fig. 1 dargestellten Ausgangsstellung. Die Druckluftversorgung des Magnetventils 19 über die Leitung 21 sowie die Druckluftversorgung des Schaltventils 30 über die Leitung 34 sind abgesperrt. Der dritte Steueranschluss 14 des Anhängersteuerventils 11 und die Lösekammer des Federspeicherbremszylinders 17 sind zunächst drucklos. Dies bedeutet, dass die Federspeicherbremse eingelegt ist, also ihre Bremswirkung erbringt. Auch die Anhängerbremse ist zu diesem Zeitpunkt über die Bremsleitung 12 betätigt, erbringt also ihre Bremswirkung.

Um den Fahrzustand bzw. die Fahrmöglichkeit herbeizuführen, werden die beiden Magnetventile 19 und 20 über die Steuerelektronik 18 in Abhängigkeit von einem Signal, beispielsweise über den Handbremsschalter 5, an- bzw. umgesteuert, so dass Druckluft aus dem Druckluftvorratsbehälter 8 über die Druckluftversorgung der Leitung 21 und über die beiden Magnetventile 19 und 20 in die Leitung 27 und über die Leitung 32 auch über die Leitung 33 zu den beiden Ausgangsanschlüssen 15 und 9 gelangen kann. Dies bedeutet für den Federspeicherbremszylinder 17 eine Beaufschlagung der Lösekammer und damit ein Aufheben der Bremswirkung des Federspeichers. Für das Anhängersteuerventil 11 bedeutet dies einen Druckanstieg am dritten Steueranschluss 14 und damit einen Druckabfall in der Bremsleitung 12, so dass auch die Anhängerbremse ihre Bremswirkung verliert. Damit kann das Fahrzeug fahren.

Wenn während der Fahrt eine Hilfsbremsung erfolgen soll, wird das Magnetventil 19 umgeschaltet, so dass es wiederum die in Fig. 1 dargestellte Stellung einnimmt. Das Magnetventil 20 bleibt dagegen eingeschaltet, so dass es seine Durchgangsstellung einnimmt. Damit wird eine gezielte Entlüftung der Ausgangsanschlüsse 9, 15 über die Leitungen 10, 33, 32, 27, 26 und 16, 27, 26 herbeigeführt, vorzugsweise in gestufter Arbeitsweise, indem das Magnetventil 19 und/oder 20 mehrfach hin- und hergeschaltet wird, je nach dem, ob nur eine Druckerniedrigung oder eine zwischenzeitliche Druckerhöhung gewünscht sind. Von dem in der Leitung 27 ausgesteuerten Druck wird über die Leitung 28 und den Druck/Spannungs-Wandler 29 ein analoges Spannungssignal erzeugt und der Steuerelektronik 18 zugeführt, so dass auf diesem Wege kontrolliert werden kann, ob und inwieweit der ausgesteuerte Druck dem Signal des Handbremsschalters 5 oder einem sonstigen Eingangssignal entspricht.

Eine Prüfstellung wird aus der festgebremsten Stellung des Zugfahrzeugs und des Anhängers heraus eingestellt, um überprüfen zu können, ob die Federspeicherbremszylinder 17 des Zugfahrzeugs alleine, also ohne Einwirkung der Anhängerbremse, in der Lage sind, den Lastzug festzuhalten. Die Ausgangsstellung zum Erreichen der Prüfstellung wird dadurch realisiert, dass das Magnetventil 19 unerregt und das Magnetventil 20 erregt war oder ist. Dies entspricht einer Hilfsbremswirkung mit einem an den Ausgangsanschlüssen 9 und 15 ausgesteuerten Druck 0. Aus dieser Stellung heraus oder unter Zurückschaltung des Magnetventils 20 in die in Fig. 1 dargestellte Stellung wird nun das Schaltventil 30 über die Steuerelektronik 18 in seine andere Stellung überführt, so dass die Leitung 33 belüftet wird, während die Leitungen 27 und 32 entlüftet bleiben. Die Belüftung der Leitung 33 setzt sich über den Ausgangsanschluss 9 und die Leitung 10 bis zum dritten Steueranschluss 14 des Anhängersteuerventils 11 fort, so dass dies zu einer Entlüftung der Bremsleitung 12 führt, so dass die Bremswirkung der Anhängerbremse aufgehoben wird. Damit ist überprüfbar, ob allein die Bremswirkung der Federspeicherbremszylinder 17 ausreicht, den Lastzug insgesamt auf einem entsprechenden Gefälle zu halten.

Das Schaltventil 30 kann als Schaltventil mit einer monostabilen Schaltstellung bezeichnet werden. Diese monostabile Schaltstellung wird aufgrund der Kraft der Feder 31 eingenommen oder beibehalten, wenn eine Spannungsversorgung ausfällt oder bewusst unterbrochen wird.

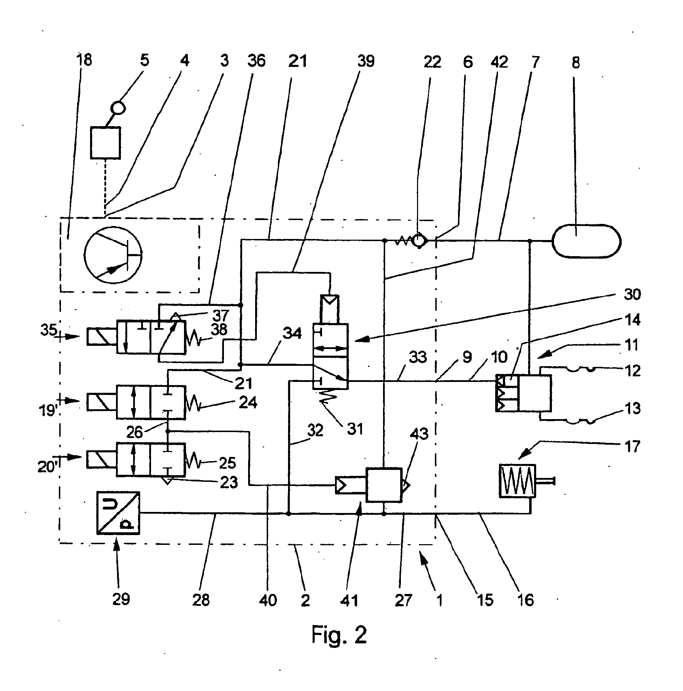

Das in **Fig. 2** dargestellte Steuergerät 1 stellt eine zweite Ausführungsform nach der Erfindung dar, die in wesentlichen Teilen mit der Ausführungsform der Fig. 1 übereinstimmt, weshalb hierauf verwiesen werden kann. Im Unterschied zu der Ausführungsform der Fig. 1 sind die beiden Stellungen des Schaltventils 30 umgekehrt angeordnet, so dass hier als monostabile Stellung infolge der Kraft der einwirkenden Feder 31 die mit Druckluft versorgte Stellung vorgesehen ist, bei der also die Leitungen 34 und 33 an die Druckluftversorgung angeschlossen sind. Außerdem ist hier das Schaltventil 30 nicht als direkt steuerbares Magnetventil ausgebildet und dargestellt, sondern als pneumatisches Schaltventil, welches durch ein drittes Magnetventil 35 vorgesteuert wird. Hieraus wird gleichzeitig erkennbar, dass auch bei der Ausführungsform der Fig. 1 das dort dargestellte und als direkt schaltbares Magnetventil ausgebildete Schaltventil 30 mit umgekehrter Anordnung seiner Schaltstellungen, also so wie anhand der Fig. 2 erkennbar, ausgebildet sein könnte.

Das Magnetventil 35 der Ausführungsform der Fig. 2 wird über die Leitung 21 und eine von dort abzweigende Leitung 36 mit Druckluft versorgt. Es weist einen eigenen Entlüftungsanschluss 37 und eine Feder 38 auf. Es besitzt die beiden dargestellten Stellungen und wird ebenfalls von der Steuerelektronik 18 gesteuert. Von dem Magnetventil 35 führt eine pneumatische Steuerleitung 39 zu dem Schaltventil 30.

Die beiden Magnetventile 19' und 20' der Ausführungsform gemäß Fig. 2 schließen zwar grundsätzlich an die Magnetventile 19 und 20 der Ausführungsform der Fig. 1 an, sind jedoch etwas anders ausgebildet und angeschlossen. So besitzen die beiden Magnetventile 19' und 20' jeweils eine stromlos geschlossene Stellung und eine erregte Durchgangsstellung. Das Magnetventil 20' weist hier den Entlüftungsanschluss 23 auf. Das Magnetventil 19' stellt damit gleichsam ein Belüftungsventil und das Magnetventil 20' ein Entlüftungsventil dar. Von der die beiden Magnetventile 19' und 20' verbindenden Leitung 26 zweigt hier eine Leitung 40 ab, die zu einem zusätzlich vorgesehenen Relaisventil 41 führt. Das Relaisventil 41 ist über eine Leitung 42 an die Leitung 21 und damit an die Druckluftversorgung angeschlossen. Das Relaisventil 41 weist wie üblich einen eigenen Entlüftungsanschluss 43 auf. An den Ausgang des Relaisventils 41 ist die Leitung 27 angeschlossen, die auch hier zum zweiten Ausgangsanschluss 15 und über die Leitung 16 zu dem Federspeicherbremszylinder 17 führt, während andererseits Verbindung über die Leitung 28 zu dem Druck/Spannungs-Wandler 29 besteht. Es sei darauf hingewiesen, dass sämtliche Ausführungsformen sowohl ohne als auch mit Relaisventil 41 ausgebildet werden können.

Die Wirkungsweise des Steuergeräts 1 in der Ausführungsform gemäß Fig. 2 ist anhand der entsprechenden Beschreibung der Ausführungsform der Fig. 1 bereits verständlich. Ergänzend sei nur darauf hingewiesen, dass die Einschaltung des Relaisventils 41 dann für einen Druckanstieg in der Leitung 27 sorgt, wenn es selbst über das Magnetventil 19' angesteuert wird. Das Schaltventil 30 als pneumatisch vorgesteuertes Schaltventil nimmt hier in der Ruhestellung, verursacht durch die Kraft der Feder 31, die dargestellte Stellung ein, in der die Leitung 33 mit Druckluft beschickt wird, so dass die Bremsleitung 12 entlüftet ist und damit auch die Anhängerbremse keine Wirkung erbringt. Damit wird in dieser Stellung bei entsprechender Stellung der übrigen Elemente die Prüfstellung erreicht. Um eine Hilfsbremswirkung zu erreichen, muss das Schaltventil 30 vorgesteuert über das Magnetventil 35 in seine andere Stellung verbracht werden, nämlich die Durchgangsstellung.

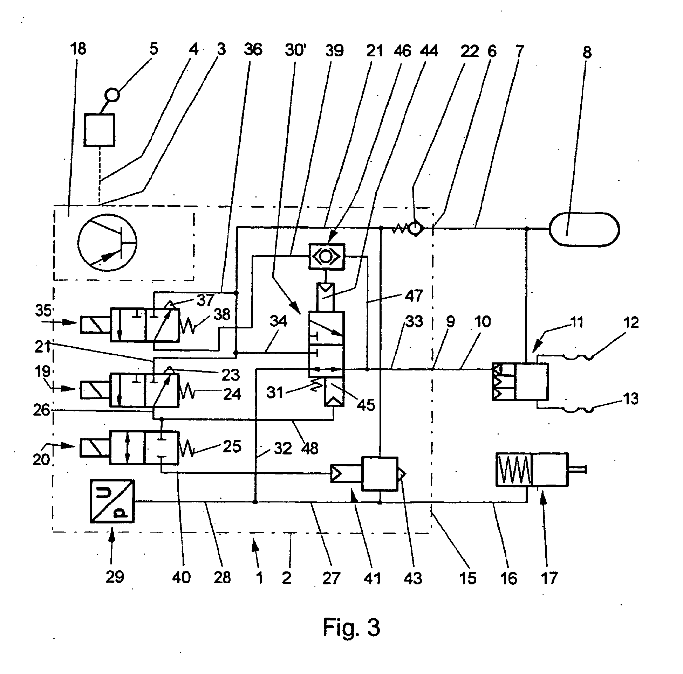

In Fig. 3 ist eine weitere Ausführungsform des Steuergeräts 1 beispielhaft dargestellt. Diese Ausführungsform ist bistabil ausgebildet. Dies bedeutet, dass das Schaltventil 30', welches zwei Stellungen besitzt, jede seiner beiden Stellungen auch dann beibehält, wenn die Spannungsversorgung ausfällt oder unterbrochen wird. Zu diesem Zweck ist im Steuergerät 1 das Schaltventil 30' vorgesehen, welches zumindest teilweise auf den bisher beschriebenen Schaltventilen 30 aufbaut bzw. eine Weiterentwicklung dessen darstellt. Das Schaltventil 30' weist die beiden dargestellten Stellungen, nämlich eine Durchgangsstellung und eine Belüftungsstellung auf, die auch vorzugsweise in der aus Fig. 3 erkennbaren Anordnung an dem Schaltventil 30' verwirklicht sind, obwohl auch die umgekehrte Anordnung, wie aus dem Vergleich der Fig. 1 und 2 hervorgeht, möglich wäre. Das Schaltventil 30' weist eine erste pneumatische Ansteuerung 44 auf, die der pneumatischen Ansteuerung des Schaltventils 30 gemäß Fig. 2 entspricht, also auf der der Feder 31 abgekehrten Seite angeordnet ist. Das Schaltventil 30' besitzt auch eine zweite pneumatische Ansteuerung 45 auf der Seite der Feder 31. Es ist ein erstes Wechselventil 46 vorgesehen, dessen Ausgang mit der ersten pneumatischen Ansteuerung 44 des Schaltventils 30' verbunden ist. Der eine Eingang des Wechselventils 46 ist über die Leitung 39 mit dem Magnetventil 35 verbunden. Der zweite Eingang des Wechselventils 46 steht über eine Leitung 47 mit der zu dem Anhängersteuerventil 11 führenden Leitung 33 in Verbindung. Diese Leitung 47 erfüllt damit Haltefunktion und stellt die Beibehaltung der einen Stellung der bistabilen Ausführung sicher. Die zweite Ansteuerung 45 ist über eine Leitung 48 mit dem Magnetventil 19 verbunden. Damit wird die zweite Haltefunktion der bistabilen Ausführung erreicht, indem trotz Beaufschlagung der Ansteuerung 44 über die Leitung 47 mit dem Magnetventil 19 die Beaufschlagung der Ansteuerung 45 möglich ist, sodass die Summe der Kräfte der Feder 31 und der Ansteuerung 45 ausreicht, die zweite Haltefunktion stabil zu erreichen.

Es ist hier ein Relaisventil 41 vorgesehen, welches an sich auch, wie vorher beschrieben, fehlen könnte. Es sind hier die Magnetventile 19 und 20 dargestellt, die der Ausführungsform gemäß Fig. 1 entsprechen. Es sei darauf hingewiesen, dass auch anders ausgebildete Magnetventile vorgesehen sein könnten, beispielsweise solche, wie es die Ausführungsform der Fig. 2 zeigt.

Die Besonderheit der Wirkungsweise der Ausführungsform des Steuergeräts 1 gemäß Fig. 3 besteht nicht so sehr in der Bereitstellung der Bremsstellung und der Prüfstellung bei stehendem Fahrzeug, sondern in der Beibehaltung sowohl der einen wie auch der anderen Stellung dann, wenn die Spannungsversorgung ausfällt oder unterbrochen wird. Es sei zunächst angenommen, dass das Fahrzeug steht und festgebremst ist. In dieser Stellung nimmt das Schaltventil 30' die in Fig. 3 dargestellte Durchgangsstellung ein, d. h. die Leitungen 33 und 27 sind miteinander verbunden. Die Leitungen 33 und 27 sind entlüftet, und zwar über den Entlüftungsausgang 43 des Relaisventils 41, welches seinerseits über das erregte Magnetventil 20 und das nicht erregte Magnetventil 19 entlüftet ist. Wird nun die Spannung unterbrochen, also bei abgestelltem festgebremsten Fahrzeug die Zündung ausgeschaltet, dann führt dies nur dazu, dass das Magnetventil 20 seine andere, durch die Feder 25 belastete Sperrstellung einnimmt. Dies ändert aber an der Einstellung des Relaisventils 41 nichts, da die vorher entlüftete Leitung 40 lediglich abgesperrt wird. Damit bleiben auch die Leitungen 33 und 27 entlüftet. Allein die Kraft der Feder 31 sorgt jetzt dafür, dass das Schaltventil in seiner Durchgangsstellung verbleibt und damit der Lastzug auch weiterhin festgebremst steht. Sowohl die Anhängerbremse über die Bremsleitung 12 wie auch die Feststellbremse über den Federspeicherbremszylinder 17 üben eine Bremswirkung auf den Anhänger aus.

Die Prüfstellung eines stehenden Lastzugs wird dann eingenommen, wenn das Schaltventil 30' in seine Druckstellung umgeschaltet wird. Dies geschieht dadurch, dass das Magnetventil 35 über die Steuerelektronik 18 angesteuert wird. In der Folge fließt Druckluft aus der Leitung 36 in die Leitung 39 zu dem ersten Wechselventil 46 und von diesem in die erste Ansteuerung 44 des Schaltventils 30', welches somit seine Druck- oder Belüftungsstellung einnimmt, so dass Druckluft aus dem Vorratsbehälter 8 über die Leitungen 21 und 34 in die Leitung 33 ausgesteuert wird und damit zum Anhängersteuerventil 11 gelangt. Damit wird die Anhängerbremse gelöst, wie es für die Prüfstellung erforderlich ist. Während dieser Schaltungen verbleiben die Leitungen 27 und 32 über das Relaisventil 41 entlüftet, so dass also die Federspeicherbremse betätigt ist, indem die Lösekammer des Federspeicherbremszylinders 17 entlüftet ist. Entlüftet ist auch die zweite Ansteuerung 45 des Schaltventils 30'. Damit ist die Prüfstellung erreicht. Wird nun in dieser Prüfstellung die Zündung ausgeschaltet, dann nimmt das Magnetventil 35 wiederum seine in Fig. 3 dargestellte und durch die Feder 38 belastete Entlüftungsstellung ein, so dass die Leitung 39 zum ersten Wechselventil 46 entlüftet wird. Da in der Leitung 47, die mit der Leitung 33 verbunden ist, jedoch Druck herrscht, wird nunmehr das Wechselventil 46 seine andere Stellung einnehmen und mit diesem Druck die erste Ansteuerung 44 beaufschlagen. Die Auslegung des Schaltventils 30' ist so festgelegt, dass die von diesem Druck bewirkte Kraft größer als die Kraft der Feder 31 ist, so dass das Schaltventil 30' seine Belüftungsstellung beibehält.

Die Prüfstellung kann auch wieder verlassen werden, indem die Spannungsversorgung wiederhergestellt wird oder noch vorhanden ist. Es wird dann das Magnetventil 19 über die Steuerelektronik 18 umgeschaltet, so dass auch die zweite Ansteuerung 45 über die Leitung 48 mit Druckluft versorgt wird. Die beiden Ansteuerungen 44 und 45 sind flächenmäßig so ausgelegt, dass sie gleichgroße Kräfte erzeugen. Die Auslegung kann auch so gewählt werden, dass jedenfalls die Summe der Kräfte der Ansteuerung 45 und der Feder 31 größer ist als die Kraft, die durch die Ansteuerung 44 herbeigeführt wird. Damit schaltet das Schaltventil 30' wiederum in seine in Fig. 3 dargestellte Durchgangsstellung. Damit kann der in der Leitung 33 vorherrschende Druck durch die Verbindung mit der Leitung 32 und der Leitung 27 sich über den Entlüftungsanschluss 43 des Relaisventils 41 entspannen. Damit wird der in der vorangehenden Prüfstellung gelöste Anhänger nunmehr auch und zusätzlich wieder festgebremst.

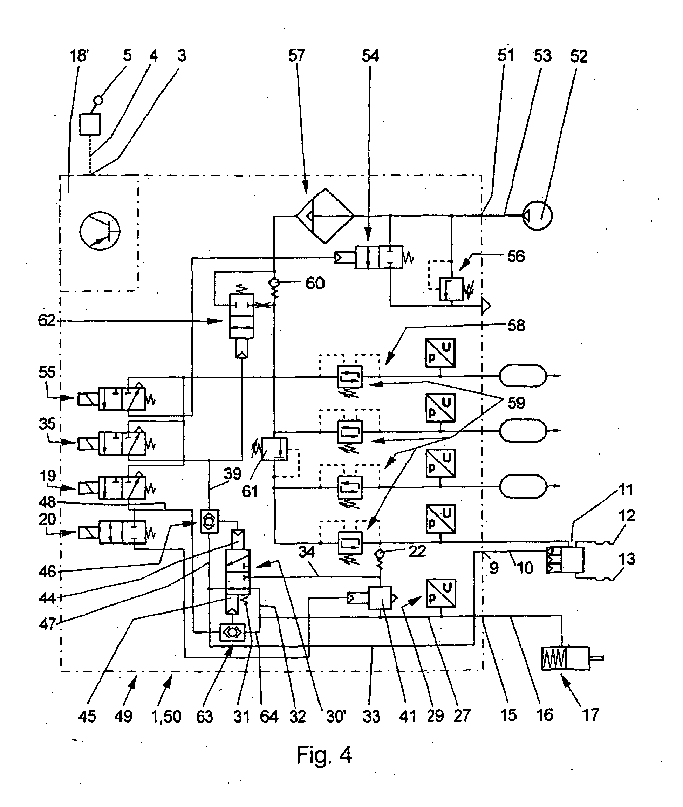

**Fig. 4** zeigt eine Ausführungsform, bei der das Steuergerät 1 in das Gehäuse 49 eines Druckluftaufbereitungsgeräts 50 integriert ist. Dieses Druckluftaufbereitungsgerät 50 kann beispielsweise so, wie dargestellt, ausgebildet sein. Es kann einen Anschluss 51 für eine von einem Kompressor 52 herangeführte Leitung 53 aufweisen. Im Gehäuse 49 des Druckluftaufbereitungsgeräts 50 kann ein Druckregler vorgesehen sein, dessen wesentliche Elemente aus einem Auslassventil 54 und einem seiner Vorsteuerung dienenden Magnetventil 55 bestehen. Es kann ein Sicherheitsventil 56 zur Begrenzung einer maximalen Druckhöhe im System vorgesehen sein, weiterhin ein Lufttrockner 57 und ein Mehrkreisschutzventil 58, welches durch eine Anzahl von Überströmventilen 59 symbolisiert wird, die den einzelnen Kreisen zugeordnet sind, von denen symbolhaft einige Behälter dargestellt sind. Nach einem Rückschlagventil 60 beginnt also das Mehrkreisschutzventil 58, dessen Überströmventile 59 durch eine Zentralbelüftung angeströmt werden, in der, wie dargestellt, ein Druckbegrenzungsventil 61 für nachrangige Kreise vorgesehen sein kann. Weiterhin ist ein Regenerationsventil 62 vorgesehen, welches hier von dem Magnetventil 35 gesteuert bzw. geschaltet wird. Die Ausbildung und Anordnung der Magnetventile 19, 20, 35, 55 ist hier durch Mehrfachbelegung klein gehalten, d. h. die Magnetventile erfüllen mehrere Funktionen, um den baulichen Aufwand zu reduzieren. Es ist natürlich auch möglich, an dieser Stelle mehr als die vier dargestellten Magnetventile oder die Magnetventile in einer anderen Anordnung und Schaltung anzuordnen, wie es im Einzelnen in der DE 103 14 642 B3 dargestellt und beschrieben ist. Fig. 4 zeigt insofern nur eine besonders vorteilhafte Ausführungsform mit einer geringen Anzahl von Magnetventilen. Es ist erkennbar, dass hier auch das Schaltventil 30' in seiner aus Fig. 3 erkennbaren Ausbildung integriert ist. Der ersten Ansteuerung 44 ist auch hier das erste Wechselventil 46 vorgeschaltet. Auch der zweiten Ansteuerung 45 des Schaltventils 30' auf der Seite der Feder 31 ist ein zweites Wechselventil 63 vorgeschaltet, dessen einer Eingangsanschluss über die Leitung 48 mit dem Magnetventil 19 in Verbindung steht. Der andere Eingangsanschluss steht über eine Leitung 64 mit der Leitung 27 und der Leitung 32 in Verbindung, die letztlich zu dem Federspeicherbremszylinder 17 führen.

Der besondere Vorteil dieser Ausführungsform bei entsprechender Auslegung der durch die Ansteuerungen 44 und 45 erzeugten Kräfte ist der, dass bei gelöster Feststellbremse während der Fahrt die Verbindung zwischen den Leitungen 27 und 33 auch dann aufrechterhalten wird, wenn die erste Ansteuerung 44 des Schaltventils 30' durch Umschalten des Magnetventils 35 belüftet wird.

Bei einem solchen Druckluftaufbereitungsgerät 50 ist normalerweise bereits eine Steuerelektronik vorhanden. Diese Steuerelektronik wird so modifiziert, dass sie auch die Funktion der bisher beschriebenen Steuerelektronik 18 erfüllt, so dass sich im Gehäuse 49 eine Steuerelektronik 18' ergibt. Es ist natürlich auch möglich, die Steuerelektronik beizubehalten und die Steuerelektronik 18 zusätzlich zu integrieren. Auch andere Kombinationen sind denkbar. Auch eine externe Elektronik könnte zur Steuerung herangezogen werden.

### BEZUGSZEICHENLISTE

- 1: Steuergerät
- 2: Gehäuse
- 3: Eingangsanschluss
- 4: elektrische Leitung
- 5: Handbremsschalter
- 6: Eingangsanschluss
- 7: Leitung
- 8: Druckluftvorratsbehälter
- 9: Ausgangsanschluss
- 10: Leitung

- 11: Anhängersteuerventil
- 12: Bremsleitung
- 13: Vorratsleitung
- 14: Steueranschluss
- 15: Ausgangsanschluss
- 16: Leitung
- 17: Federspeicherbremszylinder
- 18: Steuerelektronik
- 19, 19': Magnetventil
- 20, 20': Magnetventil

- 21: Leitung
- 22: Rückschlagventil
- 23: Entlüftungsanschluss
- 24: Feder
- 25: Feder
- 26: Leitung
- 27: Leitung
- 28: Leitung
- 29: Druck/Spannungs-Wandler
- 30, 30': Schaltventil

- 31: Feder
- 32: Leitung
- 33: Leitung
- 34: Leitung
- 35: Magnetventil
- 36: Leitung
- 37: Entlüftungsanschluss
- 38: Feder
- 39: Steuerleitung
- 40: Leitung

- 41: Relaisventil
- 42: Leitung
- 43: Entlüftungsanschluss
- 44: pneumatische Ansteuerung
- 45: pneumatische Ansteuerung
- 46: Wechselventil
- 47: Leitung
- 48: Leitung
- 49: Gehäuse
- 50: Druckluftaufbereitungsgerät

- 51: Anschluss
- 52: Kompressor
- 53: Leitung
- 54: Auslassventil
- 55: Magnetventil
- 56: Sicherheitsventil
- 57: Lufttrockner
- 58: Mehrkreisschutzventil
- 59: Überströmventil
- 60: Rückschlagventil

- 61: Druckbegrenzungsventil
- 62: Regenerationsventil
- 63: Wechselventil
- 64: Leitung

## Patentansprüche

1. Steuergerät (1) für eine Feststellbremse und eine Anhängerbremse einer Druckluftbremsanlage eines Kraftfahrzeugs, mit einem Eingangsanschluss (3) für Steuersignale, einem Eingangsanschluss (6) für eine Druckluftversorgung, einem zu einem Anhängersteuerventil (11) führenden Ausgangsanschluss (9) und einem zu Federspeicherbremszylindern (17) des Kraftfahrzeugs führenden Ausgangsanschluss (15), bei dem in einem Gehäuse (2, 49) mindestens zwei von einer Steuerelektronik schaltbare Magnetventile (19, 20; 19', 20') zum gemeinsamen Be- und Entlüften der beiden Ausgangsanschlüsse (9, 15) und ein Schaltventil (30, 30') vorgesehen sind, wobei das zweite Magnetventil (20; 20'), welches ein 2/2-Wegeventil ist, unerregt durch die Kraft einer Feder (25) eine Sperrstellung einnimmt und wobei das Schaltventil (30, 30') in einer Stellung die beiden Ausgangsanschlüsse (9, 15) miteinander verbindet und in der anderen Stellung den zu dem Anhängersteuerventil führenden Ausgangsanschluss (9) belüftet, während der zu den Federspeicherbremszylindern (17) führende Ausgangsanschluss (15) über die beiden Magnetventile (19, 20; 19', 20') be- und entlüftbar bleibt.

2. Steuergerät nach Anspruch 1, **dadurch gekennzeichnet, dass** das Schaltventil (30, 30') zwei Stellungen aufweist, nämlich eine erste Stellung, in der die beiden Ausgangsanschlüsse (9, 15) des Steuergeräts (1, 50) miteinander verbunden sind, und eine zweite Stellung, in der der Ausgangsanschluss (9) zu dem Anhängersteuerventil (11) mit der Druckluftversorgung verbunden und der Ausgangsanschluss (15) zu den Federspeicherbremszylindern (17) unbeeinflusst bleibt.

3. Steuergerät nach Anspruch 2, **dadurch gekennzeichnet, dass** das Schaltventil (30) als Magnetventil ausgebildet ist, das von der Steuerelektronik (18, 18') geschaltet wird.

4. Steuergerät nach Anspruch 2, **dadurch gekennzeichnet, dass** das Schaltventil (30, 30') als pneumatisches Schaltventil ausgebildet ist, zu dessen Vorsteuerung ein drittes Magnetventil (35) vorgesehen ist.

5. Steuergerät nach Anspruch 4, **dadurch gekennzeichnet, dass** das vorgesteuerte Schaltventil (30') auf jeder Seite je eine pneumatische Ansteuerung (44, 45) und auf einer Seite zusätzlich eine Feder (31) aufweist, und dass der der Feder (31) gegenüberliegenden Ansteuerung (44) ein Wechselventil (46) vorgeschaltet ist, das einerseits an das Magnetventil (35) und andererseits an die zu dem Anhängersteuerventil (11) führende Leitung (33) angeschlossen ist.

6. Steuergerät nach Anspruch 5, **dadurch gekennzeichnet, dass** die Ansteuerung (45) des Schaltventils (30') auf der Seite der Feder (31) an das Magnetventil (19) angeschlossen ist.

7. Steuergerät nach Anspruch 6, **dadurch gekennzeichnet, dass** die Durchgangsstellung des Magnetventils (30') auf der von der Feder (31) belasteten Seite vorgesehen ist.

8. Steuergerät nach einem oder mehreren der Ansprüche 1 bis 7, **dadurch gekennzeichnet, dass** ein Relaisventil (41) vorgesehen ist, das zwischen die Magnetventile (19, 20; 19', 20') und die zu dem Ausgangsanschluss (15) führende Leitung (27) eingeschaltet ist.

9. Steuergerät nach einem oder mehreren der Ansprüche 1 bis 8, **dadurch gekennzeichnet, dass** das Steuergerät (1) zumindest teilweise integrierter Bestandteil eines Druckluftaufbereitungsgeräts (50) mit vorzugsweise allen der nachfolgend genannten Elemente Druckregler (55, 56), Lufttrockner (57), Regenerationseinrichtung (35, 32), Mehrkreisschutzventil (58) usw. ist.

10. Steuergerät nach Anspruch 9, **dadurch gekennzeichnet, dass** dem in das Druckluftaufbereitungsgerät (50) integrierten Schaltventil (30') ein zweites Wechselventil (63) zugeordnet ist, das eingangsseitig an das Magnetventil (19) und die Leitung (27) und ausgangsseitig an die Ansteuerung (45) angeschlossen ist.

## Claims

1. A control device (1) for a parking brake and a trailer brake of an air pressure brake system for a vehicle, including an input (3) for control signals, an input (6) for supply of pressurized air, an output (9) connected with a trailer-control valve (11), and an output (15) connected with spring-type brake actuators (17) of the vehicle, the control device having a housing (2, 49) and at least two solenoid valves (19, 20; 19', 20') to be controlled by a control electronic unit and a switching valve (30, 30') arranged therein, the solenoid valves serving to commonly aerate or vent respectively the two outputs (9, 15), the second solenoid valve (20, 20') which is a 2/2-way-valve when not energized taking a closing position due to the force of a spring (25), the switching valve (30, 30') in one position connecting the two outputs (9, 15) and in another position aerating the output (9) to the trailer control valve (11), the output (15) to the spring-type brake actuators (17) remaining to be aerated or vented by the two solenoid valves (19, 20; 19', 20').

2. The control device of claim 1, **characterized in that** the switching valve (30, 30') has two positions, meaning a first position, in which the two outputs (9, 15) of the control device (1, 50) are connected to each other, and a second position, in which the output (9) to the trailer-control valve (11) is connected to the supply of pressurized air and the output (15) to the spring-type brake actuators (17) is not influenced.

3. The control device of claim 2, **characterized in that** the switching valve (30) is a solenoid valve controlled by the control electronic unit (18, 18').

4. The control device of claim 2, **characterized in that** the switching valve (30, 30') is a pneumatic valve pre-controlled by a third solenoid valve (35).

5. The control device of claim 4, **characterized in that** the pre-controlled switching valve (30') on each side has a pneumatic control connection (44, 45) and additionally a spring (31) on one side, and **in that** a shuttle valve (46) is arranged upstream the pneumatic control connection (44) opposite to the one having the spring (31), the shuttle valve being connected on the one hand with the solenoid valve (35) and on the other hand with the conduit (33) to the trailer-control valve (11).

6. The control device of claim 5, **characterized in that** the control connection (45) of the switching valve (30') having the spring (31) is connected with the solenoid valve (19).

7. The control device of claim 6, **characterized in that** the connecting position of the solenoid valve (30') is arranged at the side having the spring (31).

8. The control device of one or more of the claims 1 to 7, **characterized in that** a relay valve (41) is provided positioned between the solenoid valves (19, 20; 19', 20') and the conduit (27) to the output (15).

9. The control device of one or more of the claims 1 to 8, **characterized in that** the control device (1) at least partially is an integrated part of an air processing unit (50) preferably having all of the following elements pressure regulator (55, 56), air dryer (57), regeneration unit (35, 32), multi-circuit protection valve (58) etc..

10. The control device of claim 9, **characterized in that** a second shuttle valve (63) is assigned to the switching valve (30') integrated in the air processing unit (50), the second shuttle valve on the input side being connected to the solenoid valve (19) and the conduit (27) and on the output side being connected to the control connection (45).

## Revendications

1. Dispositif de commande (1) pour un frein de stationnement et un frein de remorque d'un système de freinage à air comprimé pour un véhicule automobile, comportant un raccord d'entrée (3) pour des signaux de commande, un raccord d'entrée (6) pour l'alimentation en air comprimé, un raccord de sortie (9) menant vers une soupape de pilotage de la remorque (11) et un raccord de sortie (15) menant vers les vérins de frein à accumulation (17) du véhicule automobile, dans lequel il est prévu dans un boîtier (2, 49) au moins deux soupapes magnétiques (19, 20 ; 19', 20'), actionnables par une électronique de commande pour l'admission et l'évacuation d'air dans les deux raccords de sortie (9, 15), et une soupape de commande (30, 30'), sachant que la deuxième soupape magnétique (20 ; 20') réalisée sous la forme d'une 2/2-soupape, non sollicitée par la force d'un ressort (25), est amenée dans une position de fermeture, et sachant que la soupape de commande (30, 30'), dans une position, relie les deux raccords de sortie (9, 15) l'un à l'autre et, dans l'autre position, fait entrer l'air dans le raccord de sortie (9) menant vers la soupape de pilotage de la remorque (11), alors que le raccord de sortie (15), menant vers les vérins de frein à accumulation (17), continue à pouvoir recevoir de l'air et à pouvoir être purgé par les deux soupapes magnétiques (19, 20 ; 19', 20').

2. Dispositif de commande selon la revendication 1, **caractérisé en ce que** la soupape de commande (30, 30') possède deux positions, à savoir une première position, dans laquelle les deux raccords de sortie (9, 15) du dispositif de commande (1, 50) communiquent l'un avec l'autre, et une deuxième position, dans laquelle le raccord de sortie (9) menant vers la soupape de pilotage de la remorque (11) est relié à l'alimentation en air comprimé, et le raccord de sortie (15) menant vers les cylindres de frein à accumulation (17) reste non influencé.

3. Dispositif de commande selon la revendication 2, **caractérisé en ce que** la soupape de commande (30) est réalisée sous la forme d'une soupape magnétique, qui est actionnée par l'électronique de commande (18, 18').

4. Dispositif de commande selon la revendication 2, **caractérisé en ce que** la soupape de commande (30, 30') est réalisée sous la forme d'une soupape de commande pneumatique, qui est pilotée par une troisième soupape magnétique (35).

5. Dispositif de commande selon la revendication 4, **caractérisé en ce que** la soupape de commande (30, 30') pilotée comporte sur chaque côté respectivement un élément d'activation (44, 45) pneumatique et, en plus, un ressort (31) sur un côté, et **en ce qu'**en amont de l'élément d'activation (44), situé en face du ressort (31), est monté un sélecteur de circuit (46), qui est raccordé, d'une part, à la soupape magnétique (35) et, d'autre part, à la conduite (33) menant vers la soupape de pilotage de la remorque (11).

6. Dispositif de commande selon la revendication 5, **caractérisé en ce que** l'élément d'activation (45) de la soupape de commande (30') est raccordé à la soupape magnétique (19) sur le côté du ressort (31).

7. Dispositif de commande selon la revendication 6, **caractérisé en ce que** la position de passage de la soupape magnétique (30') est prévue sur le côté sollicité par le ressort (31).

8. Dispositif de commande selon l'une quelconque des revendications 1 à 7, **caractérisé en ce qu'**il est prévu une soupape relais (41), qui est intercalée entre les soupapes magnétiques (19, 20 ; 19', 20') et la conduite (27) menant le raccord de sortie (15).

9. Dispositif de commande selon l'une quelconque des revendications 1 à 8, **caractérisé en ce que** le dispositif de commande (1) est un composant, au moins partiellement intégré, d'un dispositif de compression d'air (50) comportant de préférence tous les éléments cités ci-après : régulateur de pression (55, 56), séchoir à l'air (57), dispositif de régénération (35, 32), soupape de protection de plusieurs circuits (58), etc.

10. Dispositif de commande selon la revendication 9, **caractérisé en ce qu'**à la soupape de commande (30'), intégrée dans le dispositif de compression d'air (50), est associé un deuxième sélecteur de circuit (63), qui est raccordé, du côté admission, à la soupape magnétique (19) et à la conduite (27) et, du côté sortie, à l'élément d'activation (45).
